# EUROPEAN PATENT SPECIFICATION

(11) **EP 1 020 960 B1**
(45) Date of publication and mention of the grant of the patent: **09.01.2002**
(21) Application number: 00108453.2
(22) Date of filing: 23.10.1995
(51) Int. Cl.: H01R 13/52

(54) **Sealing assembly for socket connectors**
Dichtungsanordnung für Steckverbinder
Dispositif d'étancéité pour connecteur à fiches

(30) Priority: 25.10.1994 US 328644
(43) Date of publication of application: 19.07.2000
(62) Divisional of application: 95938942.0
(73) Proprietor: TYCO Electronics Corporation, Menlo Park, CA 94025-1164 (US)
(72) Inventor: Vranicar, Anthony, Santa Clara, California 95051 (US); Huang, Richard S., Saratoga, California 95070 (US); Edwards, Larry M., Fremont, California 94536 (US); Landers, Carl F., Redwood City, California 94063 (US); Dong, Wesley, Belmont, California 94002 (US); Wasilewski, Frank, Redwood City, California 94062 (US)
(74) Representative: Beitsma, Gerhard Romano

(56) References cited:
- DE-A- 2 835 832
- DE-A- 3 607 451
- US-A- 3 764 959
- US-A- 4 114 974
- US-A- 4 900 068

## Description

This invention relates to sealing assemblies for sealing an elongate member, eg an insulated electrical cable, into a tubular socket connector and into which the end of the elongate member is inserted, and which comprise a nut threadedly engageable on an external thread on the end of the connector, and a sealing member fitting inside the nut, the sealing member having a plurality of gripping members which serve to grip the end of the elongate member as the nut is tightened on the connector.

More especially, but not exclusively, the invention relates to sealing assemblies for sealing an insulated electrical heating cable into an electrical connector of the type described in WO 96/13080.

In the description which follows reference will exclusively be made to sealing assemblies for sealing the end of an electrical cable, more especially a heating cable, into an electrical connector comprising a tubular socket for the entry of the cable. However it is to be understood that the principles described herein may equally well be applied to other types of socket connector and which are designed to be connected to the end of some other kind of elongate member.

Sealing assemblies of the kind described are known, wherein the members which grip the end of the cable as the nut is tightened are an integral part of the tubular socket itself, and especially when that tubular socket is formed from an engineering plastics material. However, in such assemblies the plastics or other material may not have the necessary physical, more especially flexural, properties to adequately fulfill both functions, i.e. those of the tubular socket itself and those of the gripping members.

Reference is also made to DE-A-28 35 832 in which a cable sealing assembly is disclosed, the assembly comprising a sealing ring fitting inside the nut and having two annular cable gripping members inside the ring to grip the cable as the nut is tightened.

In accordance with the present invention we have found that a sealing assembly in which the gripping elements are in the form of axially extending fingers composed of an engineering plastics material having physical, especially flexural properties that are different from that of the enclosure into which they are inserted, e.g. an inlet port, provides advantages over conventional sealing assemblies. For adequate sealing it is necessary that the fingers be flexible in order to conform to the surface of the heating cable and/or to provide adequate sealing force to the grommet-heating cable interface when the nut is tightened. Conventional assemblies, in which the enclosure and the gripping elements are a single component, are thus prepared from a relatively soft and flexible material which may not have the necessary strength, rigidity, or heat resistance to withstand installation and impact. By using the assembly of this invention in which there are two separate components, the fingers can be prepared from a material, e.g. an engineering plastics, with different physical properties. Furthermore, the sealing assembly can be used with a grommet. If the connector comprises a separate strain relief system, e.g. as described in WO 96/13080, a relatively soft grommet, which can be tightened sufficiently by hand without the need for special tools, can be used. This is in contrast to conventional sealing assemblies in which the grommet must provide strain relief and therefore be hard enough to provide strain relief for the sealed element. The assembly must be disassembled to insert the element through the the hard grommet, and tools must be used to tighten the nut sufficiently.

Thus, the present invention provides a sealing assembly which comprises
(1) a first component which (a) is a hollow cylinder having an outer surface at least a part of which comprises screw threads, and (b) is composed of a first material;
(2) a second component which (a) is a hollow cylindrical ring from which a plurality of cable gripping fingers extend perpendicularly to the plane of the ring, said fingers at least being composed of a second material which (i) is a polymeric composition and (ii) has a flexural modulus of at most 3.5 kg/m² (500,000 psi) and an ultimate elongation of at least 50%, and (b) is suitable for mating with the first component; and
(3) a third component which is (a) a nut, and (b) can be threaded onto the threads of the first component.

The ring and the gripping fingers may be integrally formed of one and the same plastics material.

In the present invention the fingers act as a bearing surface to grip the cable, or a grommet, by means of a uniformly distributed radial force. The fingers may have a uniform cross-section or may taper from the base to the tip. The size and shape are dependent upon the size of the cable or the grommet, if used, and the desired gripping force. The fingers are relatively flexible and are composed of the said second material which is a polymeric composition. The first an second materials may be the same material, i.e. of the same chemical composition but of different physical properties, or a different material. Polymeric materials for use as either or both the first material and the second material include polyester, e.g. polybutylene terephthalate or polyethylene terephthalate, polycarbonate, polyamide, polypropylene and polyethylene. For some applications fillers, e.g. glass, carbon black or talc, can be added to either or both the first and second materials. The second material, i.e. of the fingers, at least, of the sealing ring has, as indicated, a flexural modulus of at most 3.5 kg/m² (500,000 psi), preferably at most 2.8 kg/m² (400,000 psi), particularly at most 2.1 kg/m² (300,000 psi) and especially at most 1.4 kg/m² (200,000 psi), when measured according to ASTM D790, and an ultimate elongation of at least 50%, preferably at least 100%, particularly at least 150%, an especially at least 200%, when measured according to ASTM D638. Generally the flexural modulus is at least 0.07 kg/m² (10,000 psi). In a preferred embodiment, the second material has a flexural modulus, as measured by ASTM D790 which is at most 0.5 times, preferably at most 0.4 times, and particularly at most 0.3 times that of the first composition. In addition, in the preferred embodiment, it is preferred that the second material have an ultimate elongation, as measured by ASTM D638, which is at least 2 times, preferably at least 5 times, and particularly at least 10 times that of the first material.

The sealing assembly of the invention also includes a nut which can be screwed onto the threads of the first component to hold the assembly in place. The nut may comprise a single piece or two or more pieces and serves to compress the fingers when it is tightened. In addition to the fingers, the second component, i.e. the sealing ring, may comprise one or more positioning elements e.g. locking arms, which project from the ring in a direction perpendicular to the plane of the ring and engage corresponding detents in the first component. These locking arms ensure that the ring remains in position relative to the first component and does not rotate as the nut is tightened.

For many applications, it is preferred that the sealing assembly also comprises a fourth component which is a grommet. The grommet fits in between the sealing ring and the socket and preferably has a collar which fits inside the sealing ring so as to be held by the gripping fingers of the sealing ring as the nut is tightened. The grommet serves to seal the connector from moisture ingress at the point at which the cable enters the connector. The surface of the grommet may be smooth, although to accommodate different sizes of cable, the inside may be ribbed. The rim of the grommet may also comprise a notch with which the locking arm, preferably provided on the sealing ring, engages to likewise prevent the grommet from rotating as the nut is tightened.

As the grommet is separate from the sealing ring and provides no part in the cable-gripping or strain-relieving function, the grommet may be of a softer material than is conventionally used in such assemblies.

For ease of shipping and installation, the first component, i.e. the tubular socket connector, may comprise a locking element, e.g. a raised detail or bump, which serves to mate to a corresponding mating element on the nut, when the nut is fully tightened, thus locking the nut onto the connector.

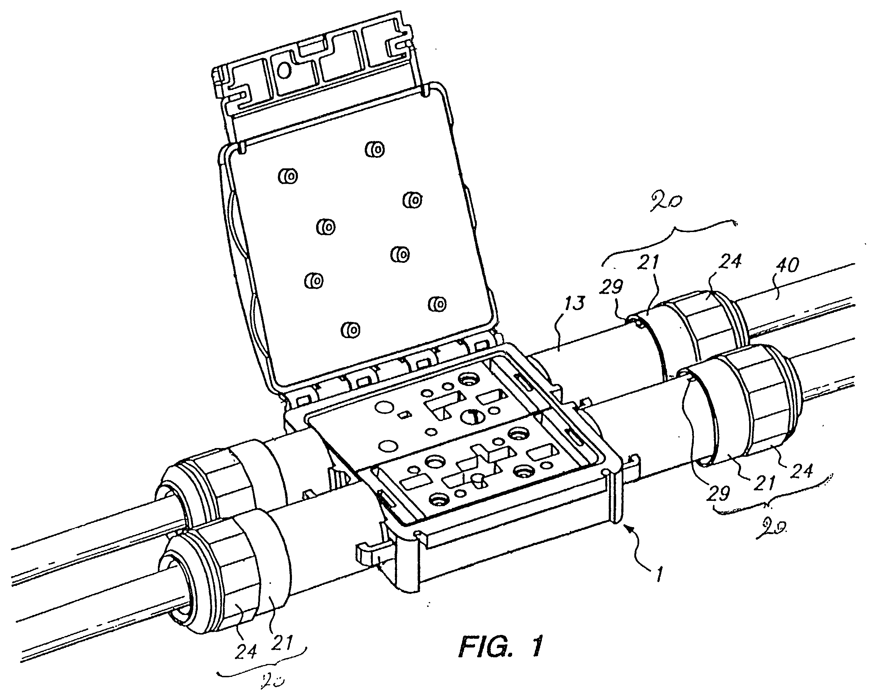

The invention is illustrated by the accompanying drawings in which Figure 1 shows a perspective view of a connector according to WO 96/13080 and which incorporates four sealing assemblies according to this invention and indicated generally by the reference numeral 20.

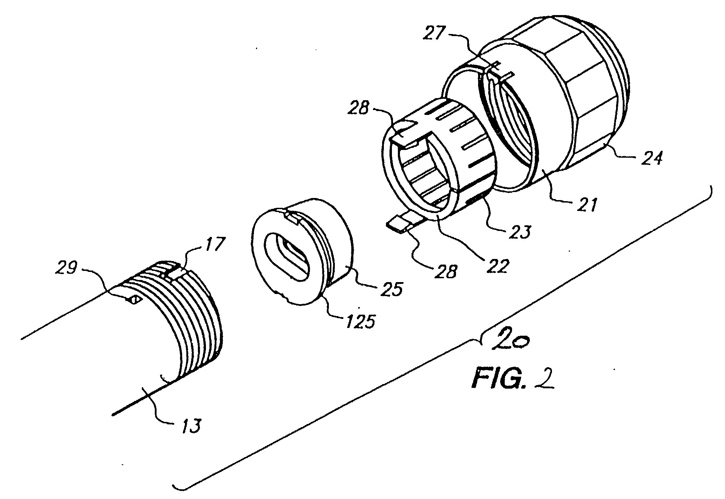

Figure 2 is an exploded view of one of those sealing assemblies and showing in detail the combination of elements which make up this invention in its most preferred form.

For a detailed description of the connector shown in Figure 1 reference should be made to the description ofthat connector contained in WO 96/13080. Apart from the sealing assemblies 20, the construction of the connector shown in Figure 1 forms no part of this invention.

So far as this invention is concerned, Figure 2 shows an exploded view of a preferred embodiment of an assembly 20 according to this invention. This assembly comprises a first component which is an inlet port 13 to the connector.

The second component 22 is a sealing ring having an array of gripping fingers 23 radially arranged therearound and extending generally perpendicular to the plane of the ring, i.e. generally axially of the device. The sealing ring 22 and fingers 23 are moulded from an engineering plastics material having the physical properties hereinbefore described.

The third component 21 is a nut, including gripping potions 24, and which is engageable on the external thread on the end of the inlet port 21.

The fourth component is an optional grommet 25 which fits between the sealing ring 22 and the inlet port 21. The grommet has a rearwardly extending collar which engages in the sealing ring so as to be compressed against the cable 40 (see Figure 1) by the fingers 23 as the nut 21 is tightened. If the grommet is not fitted then the fingers 23 will, of course, directly engage the cable.

When the nut is tight a first mating element 27 on the nut 21 engages a corresponding locking element 29 on the inlet port 13 to lock the nut in position thereby to allow for proper installation, positioning and shipping of a preassembled connector assembly. Two further positioning elements or tabs 28 on the ring 22 engage corresponding slots 17 on the inlet port 13 to locate the ring and prevent the ring rotating as the nut is screwed onto the inlet port. Rotation of the grommet 25 as the nut is tightened is likewise prevented by engagement of the tabs 28 on the ring 22 in two notches in the end flange 125 of the grommet.

## Claims

1. A sealing assembly (20) for sealing engagement with an elongate member (40) at the point of entry of that member into a tubular socket connector (13), said assembly comprising said tubular socket connector (13) and an internally threaded nut (24) engageable over the end of the elongate member (40) at the point of entry of that member into the socket (13) and threadedly engageable with an external thread on the end of the tubular socket (13), and an annular sealing ring (22) fitting inside the nut, the sealing ring (22) comprising a plurality of flexible gripping elements (23) which serve to grip the end of the elongate member (40) as the nut (24) is tightened on the tubular connector, **characterized in that** the gripping elements (23) comprise a plurality of flexible fingers radially spaced one from the other around the ring (22) and extending in a direction perpendicular to the plane of the ring, said fingers, at least, being composed of an engineering plastics material having physical, flexural characteristics that are different from those of the material comprising the said socket (13) and comprise a flexural modulus of at most 3.5kg/m² (500,000 psi) and an ultimate elongation of at least 50%.

2. An assembly according to Claim 1, wherein the said fingers are an integral part of the sealing ring (22), the whole ring being composed of the said plastics material.

3. An assembly according to Claim 1 or 2, wherein the material comprising the tubular socket connector (13) is likewise an engineering plastics.

4. An assembly according to Claim 1, 2 or 3, wherein the said fingers, at least, are of an engineering plastics material having a flexural modulus of at most 2.8kg/m² (400,000 psi), preferably at most 1.4kg/m² (200,000 psi), and an ultimate elongation of at least 100%, preferably at least 200%.

5. An assembly according to Claim 4, wherein the flexural modulus of the plastics material forming the said fingers (23) is at least 0.07kg/m² (10,000 psi).

6. An assembly according to Claim 3, or either of Claims 4 and 5 as dependent on Claim 3, wherein the flexural modulus of the plastics of the said fingers (23) is at most 0.5 times that of the plastics material of the tubular socket connector, preferably at most 0.3 times.

7. An assembly according to Claim 3, or any one of Claims 4 to 6 as dependent on Claim 3, wherein the ultimate elongation of the plastics of the sealing ring (22) is at least 2 times, preferably at least 5 and especially at least 10 times, that of the plastics material of the tubular socket connector (13).

8. An assembly according to any one of the preceding Claims, wherein the sealing ring (22) has a positioning element (28) which engages a slot (17) in the tubular socket connector (13) to prevent the ring from rotating as the nut (21) is tightened.

9. An assembly according to any one of the preceding Claims, wherein the nut (21) has a mating element (27) which engages a locking element (29) on the tubular connecting socket (13) when engaged thereon to a predetermined distance and serving to lock the nut at that position on the tubular socket.

10. An assembly according to any one of the preceding Claims, comprising a grommet (25) fitting between the sealing ring (22) and the end of the tubular socket connector (13).

11. An assembly according to Claim 10, as dependent on Claim 8, wherein the positioning element (28) on the sealing ring (22) also engages a recess on the rim of the grommet (25) to prevent the latter from rotating as the nut (21) is tightened.

12. An assembly according to Claim 10 or 11, wherein the grommet (25) has a collar portion (125) which when the sealing assembly is assembled engages within the sealing ring (22) and is compressed against the elongate member (40) by the fingers on the sealing ring as the nut (21) is tightened.

13. An assembly as claimed in any one of the preceding Claims, wherein the tubular socket connector (13) is part of an electrical connector designed for connection to an insulated electrical cable as said elongate member.

## Patentansprüche

1. Dichtungsanordnung (20) für den abdichtenden Eingriff mit einem länglichen Element (40) an der Stelle des Eintritts dieses Elements in einen rohrförmigen Buchsenverbinder (13), wobei die Anordnung den rohrförmigen Buchsenverbinder (13) und eine Innengewinde-Mutter (24) aufweist, die über das Ende des länglichen Elements (40) an der Eintrittsstelle dieses Elements in die Buchse (13) aufschiebbar ist und mit einem Außengewinde an dem Ende der rohrförmigen Buchse (13) in gewindemäßigen Eingriff bringbar ist, sowie einen in das Innere der Mutter passenden ringförmigen Dichtungsring (22) aufweist, wobei der Dichtungsring (32) eine Vielzahl von flexiblen Greifelementen (23) aufweist, die zum Greifen des Endes der länglichen Elements (40) beim Festziehen der Mutter (24) auf dem rohrförmigen Verbinder dienen,
**dadurch gekennzeichnet,**
**daß** die Greifelemente (23) eine Vielzahl flexibler Finger aufweisen, die radial voneinander beabstandet um den Ring (22) herum vorgesehen sind und sich in einer Richtung senkrecht zu der Ebene des Rings erstrecken, wobei zumindest die Finger aus einem technischen Kunststoffmaterial gebildet sind, das physikalische Biegeeigenschaften aufweist, die von denen des die Buchse (13) bildenden Materials verschieden sind und einen Biegemodul von höchstens 3,5 kg/m² (500.000 psi) und eine Bruchdehnung von mindestens 50 % aufweisen.

2. Anordnung nach Anspruch 1,
wobei die Finger integraler Bestandteil des Dichtungsrings (22) sind und der gesamte Ring aus dem genannten Kunststoffmaterial gebildet ist.

3. Anordnung nach Anspruch 1 oder 2,
wobei das den rohrförmigen Buchsenverbinder (13) bildende Material ebenfalls ein technischer Kunststoff ist.

4. Anordnung nach Anspruch 1, 2 oder 3,
wobei zumindest die Finger aus einem technischen Kunststoffmaterial bestehen, das einen Biegemodul von höchstens 2,8 kg/m² (400.000 psi), vorzugsweise höchstens 1,4 kg/m² (200.000 psi), sowie eine Bruchdehnung von mindestens 100 %, vorzugsweise mindestens 200 %, aufweist.

5. Anordnung nach Anspruch 4,
wobei der Biegemodul des die Finger (13) bildenden Kunststoffmaterials mindestens 0,07 kg/m² (10.000 psi) beträgt.

6. Anordnung nach Anspruch 3 oder einem der Ansprüche 4 und 5 bei deren Rückbeziehung auf Anspruch 3,
wobei der Biegemodul des Kunststoffs der Finger (23) höchstens das 0,5-fache des Biegemoduls des Kunststoffmaterials des rohrförmigen Buchsenverbinders, vorzugsweise höchstens das 0,3-fache, beträgt.

7. Anordnung nach Anspruch 3 oder einem der Ansprüche 4 bis 6 bei deren Rückbeziehung auf Anspruch 3,
wobei die Bruchdehnung des Kunststoffs des Dichtungsrings (22) mindestens das 2-fache, vorzugsweise mindestens das 5-fache und insbesondere mindestens das 10-fache der Bruchdehnung des Kunststoffmaterials des rohrförmigen Buchsenverbinders (13) beträgt.

8. Anordnung nach einem der vorausgehenden Ansprüche,
wobei der Dichtungsring (22) ein Positionierelement (28) aufweist, das in einen Schlitz (17) in dem rohrförmigen Buchsenverbinder (13) eingreift, um eine Rotation des Rings beim Festziehen der Mutter (21) zu verhindern.

9. Anordnung nach einem der vorausgehenden Ansprüche,
wobei die Mutter (21) ein Passungselement (27) aufweist, das beim Herstellen des Eingriffs mit der rohrförmigen Verbinderbuchse (13) über eine vorbestimmte Distanz mit einem Verriegelungselement (29) an dieser in Eingriff tritt und dazu dient, die Mutter in dieser Position auf der rohrförmigen Buchse zu verriegeln.

10. Anordnung nach einem der vorausgehenden Ansprüche,
mit einer Gummitülle (25), die zwischen den Dichtungsring (22) und das Ende des rohrförmigen Buchsenverbinders (13) paßt.

11. Anordnung nach Anspruch 10, bei dessen Rückbeziehung auf Anspruch 8,
wobei das Positionierelement (28) an dem Dichtungsring (22) ferner in eine Aussparung an dem Rand der Gummitülle (25) eingreift, um eine Rotation derselben beim Festziehen der Mutter (21) zu verhindern.

12. Anordnung nach Anspruch 10 oder 11,
wobei die Gummitülle (25) einen Kragenbereich (125) aufweist, der bei Montage der Dichtungsanordnung mit dem Dichtungsring (22) in Eingriff tritt und beim Festziehen der Mutter (21) durch die Finger an dem Dichtungsring gegen das längliche Element (40) zusammengedrückt wird.

13. Anordnung nach einem der vorausgehenden Ansprüche,
wobei der rohrförmige Buchsenverbinder (13) Teil eines elektrischen Verbinders ist, der zur Verbindung mit einem isolierten elektrischen Kabel als längliches Element ausgebildet ist.

## Revendications

1. Ensemble de scellement étanche (20) destiné à réaliser une prise de scellement étanche avec un élément allongé (40) au point d'entrée de cet élément dans un connecteur à douille tubulaire (13), ledit ensemble comportant ledit connecteur à douille tubulaire (13) et un écrou (24) fileté intérieurement pouvant être amené en prise sur l'extrémité de l'élément allongé (40) au point d'entrée de cet élément dans la douille (13) et amené en prise de vissage avec un filet extérieur situé sur l'extrémité de la douille tubulaire (13), et une bague annulaire (22) de scellement étanche s'ajustant à l'intérieur de l'écrou, la bague (22) de scellement étanche comportant plusieurs éléments flexibles (23) de préhension qui servent à la préhension de l'extrémité de l'élément allongé (40) pendant que l'écrou (24) est serré sur le connecteur tubulaire, **caractérisé en ce que** les éléments de préhension (23) comprennent plusieurs doigts flexibles espacés radialement les uns des autres autour de la bague (22) et s'étendant dans une direction perpendiculaire au plan de la bague, lesdits doigts, au moins, étant composés d'une matière plastique à usage technique ayant des caractéristiques physiques, de flexion, qui sont différentes de celles de la matière constituant ladite douille (13) et comprennent un module de flexion au plus de 3,5 kg/m² (500 000 psi) et un allongement à la rupture d'au moins 50 %.

2. Ensemble selon la revendication 1, dans lequel lesdits doigts font partie intégrante de la bague de scellement étanche (22), la bague étant composée entièrement de ladite matière plastique.

3. Ensemble selon la revendication 1 ou 2, dans lequel la matière constituant le connecteur à douille tubulaire (13) est de la même manière une matière plastique à usage technique.

4. Ensemble selon la revendication 1, 2 ou 3, dans lequel lesdits doigts, au moins, sont en une matière plastique à usage technique ayant un module de flexion au plus de 2,8 kg/m² (400 000 psi), avantageusement au plus de 1,4 kg/m² (200 000 psi), et un allongement à la rupture d'au moins 100 %, avantageusement d'au moins 200 %.

5. Ensemble selon la revendication 4, dans lequel le module de flexion de la matière plastique formant lesdits doigts (23) est d'au moins 0,07 kg/m² (10 000 psi).

6. Ensemble selon la revendication 3 ou l'une des revendications 4 et 5 lorsqu'elle dépend de la revendication 3, dans lequel le module de flexion de la matière plastique desdits doigts (23) est égal au plus à 0,5 fois celui de la matière plastique du connecteur à douille tubulaire, avantageusement au plus 0,3 fois.

7. Ensemble selon la revendication 3, ou l'une quelconque des revendications 4 à 6 lorsqu'elle dépend de la revendication 3, dans lequel l'allongement à la rupture de la matière plastique de la bague de scellement étanche (22) est égal à au moins 2 fois, avantageusement à au moins 5 et en particulier à au moins 10 fois, celui de la matière plastique du connecteur à douille tubulaire (13).

8. Ensemble selon l'une quelconque des revendications précédentes, dans lequel la bague de scellement étanche (22) comporte un élément de positionnement (28) qui s'engage dans une rainure (17) située dans le connecteur à douille tubulaire (13) pour empêcher la bague de tourner pendant que l'écrou (21) est serré.

9. Ensemble selon l'une quelconque des revendications précédentes, dans lequel l'écrou (21) comporte un élément d'accouplement (27) qui entre en prise avec un élément de blocage (29) situé sur la douille tubulaire de connexion (13) lorsqu'il est engagé sur elle sur une distance prédéterminée, et servant à bloquer l'écrou dans cette position sur la douille tubulaire.

10. Ensemble selon l'une quelconque des revendications précédentes, comportant un passe-fil (25) s'ajustant entre la bague de scellement étanche (22) et l'extrémité du connecteur à douille tubulaire (13).

11. Ensemble selon la revendication 10, lorsqu'elle dépend de la revendication 8, dans lequel l'élément de positionnement (28) situé sur la bague de scellement étanche (22) s'engage également dans un évidement du bord du passe-fil (25) pour empêcher ce dernier de tourner pendant que l'écrou (21) est serré.

12. Ensemble selon la revendication 10 ou 11, dans lequel le passe-fil (25) comporte une partie formant collerette (125) qui, lorsque l'ensemble de scellement étanche est assemblé, s'engage dans la bague de scellement étanche (22) et est comprimée contre l'élément allongé (40) par les doigts situés sur la bague de scellement étanche pendant que l'écrou (21) est serré.

13. Ensemble selon l'une quelconque des revendications précédentes, dans lequel le connecteur à douille tubulaire (13) fait partie d'un connecteur électrique conçu pour une connexion sur un câble électrique isolé constituant ledit élément allongé.
